(19) Europäisches Patentamt
European Patent Office
Office européen des brevets

(11) Veröffentlichungsnummer: **0 040 743**
**A2**

(12) # EUROPÄISCHE PATENTANMELDUNG

(21) Anmeldenummer: **81103582.3**

(22) Anmeldetag: **11.05.81**

(51) Int. Cl.³: **A 01 N 43/76**
// (A01N43/76, 41/06)

(30) Priorität: **22.05.80 DE 3019520**

(43) Veröffentlichungstag der Anmeldung: **02.12.81**
**Patentblatt 81/48**

(84) Benannte Vertragsstaaten: **AT BE CH DE FR GB IT LI NL**

(71) Anmelder: **BAYER AG, Zentralbereich Patente, Marken und Lizenzen, D-5090 Leverkusen 1, Bayerwerk (DE)**

(72) Erfinder: **Brandes, Wilhelm, Dr., Eichendorffstrasse 3, D-5653 Leichlingen (DE)**
Erfinder: **Kaspers, Helmut, Dr., Steglitzer Strasse 4, D-5090 Leverkusen (DE)**

(54) **Fungizide Mittel, Verfahren zu ihrer Herstellung, sowie deren Verwendung zur Bekämpfung von Pilzen.**

(57) Die Erfindung betrifft neue fungizid wirksame Kombinationen aus bekannten 3-(3,5-Dihalogenphenyl)-oxazolidin-2,4-dionen und dem bekannten N,N-Dimethyl-N'-phenyl-N'-fluordichlormethylthio-sulfamid, die eine hohe Pflanzenverträglichkeit besitzen.

Die erfindungsgemässen Wirkstoff-Kombinationen weisen eine starke mikrobizide Wirkung auf und können zur Bekämpfung von unerwünschten Mikroorganismen praktisch eingesetzt werden. Die gute Pflanzenverträglichkeit der Wirkstoff-Kombinationen in den zur Bekämpfung von Pflanzenkrankheiten notwendigen Konzentrationen erlaubt eine Behandlung von oberirdischen Pflanzenteilen, von Pflanz- und Saatgut, und des Bodens.

EP 0 040 743 A2

BAYER AKTIENGESELLSCHAFT
Zentralbereich
Patente, Marken und Lizenzen

5090 Leverkusen, Bayerwerk
Slr/W
III

Fungizide Mittel, Verfahren zu ihrer Herstellung, sowie deren Verwendung zur Bekämpfung von Pilzen

Die vorliegende Erfindung betrifft neue fungizid wirksame Kombinationen aus bekannten 3-(3,5-Dihalogenphenyl)-oxazolidin-2,4-dionen und dem bekannten N,N-Dimethyl-N'-phenyl-N'-fluordichlormethylthio-sulfamid, die eine hohe Pflanzenverträglichkeit besitzen.

Es ist bereits bekannt, daß einige 3-(3,5-Dihalogenphenyl)-oxazolidin-2,4-dione eine hohe fungizide Wirksamkeit besitzen (vgl. hierzu DE-OS 28 04 824 /‾LeA 18673/ und DE-OS 28 52 924 /‾Le A 19 330/). Bei praxisüblichem Einsatz, z.B. im Weinbau, treten jedoch gelegentlich Pflanzenschäden auf, die die generelle Verwendbarkeit dieser Mittel beschränken können.

Es wurde nun gefunden, daß neue Wirkstoffkombinationen aus

1) 3-(3,5-Dihalogenphenyl)-oxazolidin-2,4-dionen der allgemeinen Formel

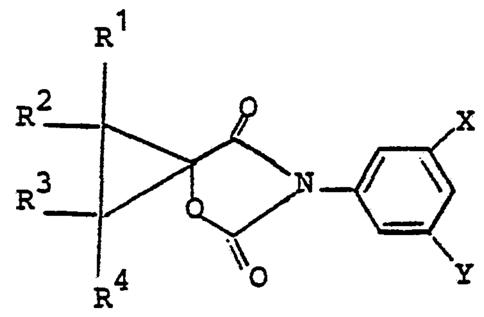

(I)

in welcher

X und Y gleich oder verschieden sind und für Halogen stehen,

$R^1$, $R^2$, $R^3$ und $R^4$ gleich oder verschieden sind und für Wasserstoff oder für Alkyl mit bis zu 4 Kohlenstoffatomen stehen, und ferner noch

$R^1$ oder $R^2$ gemeinsam mit $R^3$ oder $R^4$ für eine viergliedrige Kohlenstoffkette stehen können, die gemeinsam mit den beiden verbindenden Kohlenstoffatomen des Cyclopropanringes einen ankondensierten Cyclohexan- oder Cyclohexen-Ring bildet,

und 2) N,N-Dimethyl-N'-phenyl-N'-fluordichlormethyl-thiosulfamid der Formel

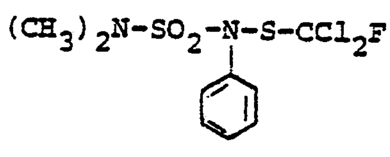

(II)

eine hohe fungizide Wirksamkeit besitzen.

Überraschenderweise besitzt die erfindungsgemäße Wirkstoffkombination nicht nur eine hohe fungizide Wirksamkeit, sondern insbesondere auch eine sehr gute Pflanzenverträglichkeit. Es wird dadurch eine wertvolle Bereicherung der Technik erzielt.

Die für die erfindungsgemäße Wirkstoffkombination benötigten 3-(3,5-Dihalogenphenyl)-oxazolidin-2,4-dione sind durch die allgemeine Formel I definiert. In dieser Formel stehen X und Y vorzugsweise für Chlor, und die Reste $R^1$ bis $R^4$ stehen vorzugsweise für Wasserstoff und für Methyl. Als Beispiele seien hier die folgenden Verbindungen aufgezeigt:

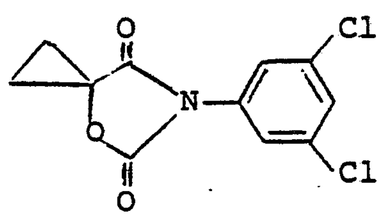

(I a)

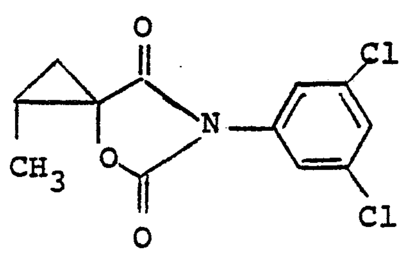

(I b)

Die Verbindungen der Formel I a und I b und deren Herstellung sind beschrieben (vgl. DE-OS 28 04 824 /‾Le A 18 673_7 und DE-OS 28 52 924 /‾Le A 19 330_7 ).

Die gleichzeitige Anwendung von den Verbindungen der Formel I a bzw. I b mit der Verbindung der Formel II mindert nicht nur das Verträglichkeitsrisiko, sondern vereinfacht auch die Pflanzenschutzmaßnahmen. In einem Arbeitsgang lassen sich z.B. die wichtigsten, durch Pilze hervorgerufenen Rebkrankheiten bekämpfen, da das Dichlofluanid (II) die bei 3-(3,5-Dihalogenphenyl)-oxazolidin-2,4-dionen der Formel I teilweise nur geringe Wirkung gegen Rebenperonospora (Plasmopara viticola) und gegen den Roten Brenner (Pseudopeziza tracheiphila) besitzt und für diese Indikationen amtlich zugelassen ist (Pflanzenschutzmittelverzeichnis 1978 der Biologischen Bundesanstalt für Land und Forstwirtschaft).

Die Verbindung der Formel II (Dichlofluanid) ist schon seit längerer Zeit allgemein bekannt, ebenso ihre Herstellung und fungizide Wirkung (Einzelheiten siehe in R. Wegler, "Chemie der Pflanzenschutz- und Schädlingsbekämpfungsmittel", Band 2, Seite 94-95 und Band 4, Seite 193-194, Springer-Verlag Berlin/Heidelberg/New York (1970 bzw. 1977)).

An Stelle von Wirkstoff 2 der Formel II (Dichlofluanid) können gegebenenfalls auch ähnliche N-Polyhalogenalkylthio-Derivate von Amido- und Imido-Verbindungen Verwendung finden. Als Beispiele für solche Verbindungen seien das N-Trichlormethylthio-phthalimid und dessen entsprechende Tetrahydro-Verbindung genannt, zwei schon seit

langer Zeit als Pflanzenschutz-Fungizide bekannte Verbindungen (Einzelheiten siehe in R. Wegler (loc.cit.), Band 2, Seiten 108-109 und Band 4, Seiten 190-192) mit den Formel

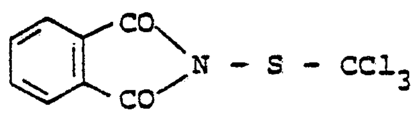

(III)
(Kurzbezeichnung "Folpet")

und

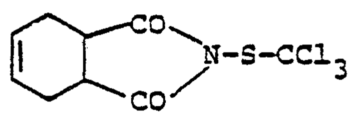

(IV)
(Kurzbezeichnung "Captan")

Ferner ist an dieser Stelle noch das 4-Methylphenyl-Derivat der Verbindung II mit der Kurzbezeichnung "Tolylfluanid" zu nennen (vgl. R. Wegler (loc.cit.), Band 4, Seite 194).

Die Gewichtsverhältnisse der beiden Wirkstoffgruppen in den erfindungsgemäßen Wirkstoffkombinationen können in relativ großen Bereichen schwanken. Im allgemeinen entfallen auf 1 Gewichtsteil an Verbindungen der Wirkstoffgruppe (1) 0,5 bis 8 Gewichtsteile an N,N-Dimethyl-N'-phenyl-N'-fluordichlormethylthio-sulfamid (Wirkstoff (2)), vorzugsweise 1 bis 4 Gewichtsteile.

Die erfindungsgemäßen Wirkstoff-Kombinationen weisen eine starke mikrobizide Wirkung auf und können zur Bekämpfung von unerwünschten Mikroorganismen praktisch eingesetzt werden. Die Wirkstoffe sind für den Gebrauch als Pflanzenschutzmittel geeignet.

Fungizide Mittel im Pflanzenschutz werden eingesetzt zur Bekämpfung von Plasmodiophoromycetes, Oomycetes, Chytridiomycetes, Zygomycetes, Ascomycetes, Basidiomycetes, Deuteromycetes.

Die gute Pflanzenverträglichkeit der Wirkstoff-Kombinationen in den zur Bekämpfung von Pflanzenkrankheiten notwendigen Konzentrationen erlaubt eine Behandlung von oberirdischen Pflanzenteilen, von Pflanz- und Saatgut, und des Bodens.

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z.B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Di-



BAD ORIGINAL

methylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen in Frage: z.B. nichtionogene und anionische Emulgatoren, wie Polyoxyäthylen-Fettsäure-Ester, Polyoxyäthylen-Fettalkohol-Äther, z.B. Alkylarylpolyglykol-äther, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azol-Metallphthalocyaninfarbstoffe und Spurennährstoffe wie Salze von Eisen, Mangan, Bor, Kupfer, Kobalt, Molybdän und Zink verwendet werden.



BAD ORIGINAL

Die Formulierungen enthalten im allgemeinen zwischen 0,1 und 95 Gewichtsprozent Wirkstoff, vorzugsweise zwischen 0,5 und 90 %.

Die Wirkstoff-Kombinationen können als solche, in Form ihrer Formulierungen oder der daraus durch weiteres Verdünnen bereiteten Anwendungsformen, wie gebrauchsfertige Lösungen, Emulsionen, Suspensionen, Pulver, Pasten und Granulate angewendet werden. Die Anwendung geschieht in üblicher Weise, z.B. durch Gießen, Tauchen, Spritzen, Sprühen, Vernebeln, Verdampfen, Injizieren, Verschlämmen, Verstreichen, Stäuben, Streuen, Trockenbeizen, Feuchtbeizen, Naßbeizen, Schlämmbeizen oder Inkrustieren.

Bei der Behandlung von Pflanzenteilen können die Wirkstoffkonzentrationen in den Anwendungsformen in einem größeren Bereich variiert werden. Sie liegen im allgemeinen zwischen 1 und 0,0001 Gew.-%, vorzugsweise zwischen 0,5 und 0,001 %.

Bei der Saatgutbehandlung werden im allgemeinen Wirkstoffmengen von 0,001 bis 50 g je Kilogramm Saatgut, vorzugsweise 0,01 bis 10 g, benötigt.

Bei Behandlung des Bodens sind Wirkstoffkonzentrationen von 0,00001 bis 0,1 Gew.-%, vorzugsweise von 0,0001 bis 0,02 %, am Wirkungsort erforderlich.

Die nachfolgenden Beispiele sollen zeigen, wie bei gleichzeitiger Anwendung von (1) 3-(3,5-Dihalogenphenyl)-oxazolidin-2,4-dionen der Formel I und (2) Dichlofluanid der Formel II eine Erhöhung der Pflanzenverträglichkeit erreicht werden kann, und wie

BAD ORIGINAL

die fungizide Wirkung der bekannten Einzelverbindungen durch deren gleichzeitige Anwendung in der erfindungsgemäßen Wirkstoffkombination nicht beeinträchtigt wird, sondern sogar eine Verbesserung der Wirkung erreicht werden kann.

BAD ORIGINAL

<u>Beispiel A</u>

Botrytis-Test (Bohnen) / protektiv

| | | |
|---|---|---|
| Lösungsmittel: | 4,7 | Gewichtsteile Aceton |
| Dispergiermittel: | 0,3 | Gewichtsteile Alkyl-arylpolyglycoläther |
| Wasser: | 95 | Gewichtsteile |

Man vermischt die für die gewünschte Wirkstoffkonzentration in der Spritzflüssigkeit nötige Wirkstoffmenge mit der angegebenen Menge des Lösungsmittels und verdünnt das Konzentrat mit der angegebenen Menge Wasser, welches die genannten Zusätze enthält.

Mit der Spritzflüssigkeit bespritzt man Pflanzen von Phaseolus vulgaris im 2-Blattstadium bis zur Tropfnässe. Nach 24 Stunden werden auf jedes Blatt 2 kleine mit Botrytis cinerea bewachsene Agarstückchen aufgelegt. Die inokulierten Pflanzen werden in einer abgedunkelten, feuchten Kammer bei 20°C aufgestellt. 3 Tage nach der Inokulation wird die Größe der Befallsflecken auf den Blättern bonitiert.

Die erhaltenen Boniturwerte werden auf Prozent Befall umgerechnet. 0 % bedeutet keinen Befall, 100 % bedeutet, daß der Befallsfleck vollständig ausgebildet ist.

Wirkstoffe, Wirkstoffkonzentrationen und Ergebnisse gehen aus der nachfolgenden Tabelle hervor:

0040743

Tabelle A

Botrytis-Test (Bohnen)/protektiv

| Wirkstoff | | Wirkstoffkonzentration (%) | Befall in (%) |
|---|---|---|---|
| **Einzelwirkstoffe:** | | | |
| 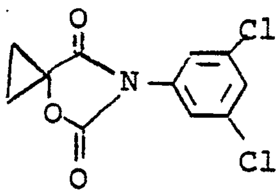 | (Ia) | 0,0062 | 76 |
| 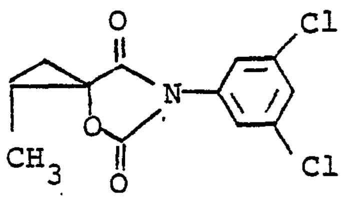 | (Ib) | 0,0062 | 96 |
| 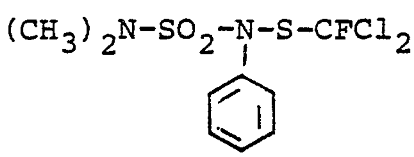 | (II) | 0,0125 | 40 |
| **Erfindungsgemäße Kombinationen** | | | |
| Ia + II | (1:2) | 0,0062<br>0.0125 | 6 |
| Ib + II | (1:2) | 0,0062<br>0,0125 | 25 |

Beispiel B:

Pflanzenverträglichkeit / Weinreben

Die Versuche wurden in normalen Rebanlagen mit unterschiedlichen Sorten durchgeführt:

Die Reben wurden nach der Blüte dreimal mit der Wirkstoffaufbereitung (Spritzbrühe) behandelt. Die Aufwandmenge pro ha betrug ca. 2000 l. Ca 3 Wochen nach der letzten Behandlung wurden die Blätter der Rebpflanzen auf Schädigung in Wertzahlen 1 bis 9 bonitiert. Dabei bedeutet

1 keine Schäden
2 bis zu 2,5 % Schäden
3 bis zu 5 % Schäden
4 bis zu 10 % Schäden
5 bis zu 15 % Schäden
6 bis zu 25 % Schäden
7 bis zu 35 % Schäden
8 bis zu 67,5 % Schäden
9 Pflanze total geschädigt.

Untersucht wurden die folgenden Rebsorten:
Müller-Thurgau, Weißburgunder, Bacchus, Albalonga, Faber.

Die Behandlung erfolgte mit den Einzelwirkstoffen I a und II , sowie mit erfindungsgemäßen Kombinationen aus I a und II im Verhältnis von 1 : 1,5. Dabei zeigte sich bei den Kombinationen eine hohe Pflanzenverträglichkeit, wie aus der nachfolgenden Tabelle ersichtlich:

<u>T a b e l l e   B</u>

Pflanzenverträglichkeit / Weinreben

| Wirkstoff | Konzentration der Wirkstoffe | Müller-Thurgau | Weiß-burgunder | Bacchus | Alba-longa | Faber |
|---|---|---|---|---|---|---|
| **Einzelwirkstoffe:** | | | | | | |
| 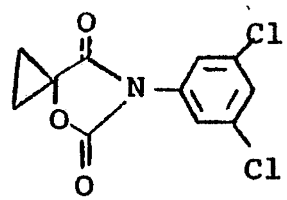 (Ia) | 0,05 % | 5 | 3 | 4 | 6 | 5 |
| 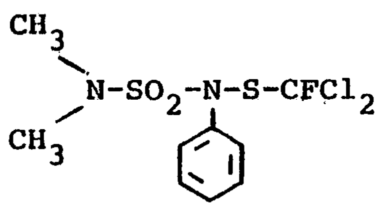 (II) | 0,1 % | 1 | 1 | 1 | 1 | 1 |
| **erfindungsgemäße Kombination** | | | | | | |
| I a<br>+ II (1:1,5) | 0,05<br>0,075 | 2 | 1 | 2 | 3 | 3 |

Patentansprüche

1) Fungizide Mittel, gekennzeichnet durch einen Gehalt an einer Wirkstoffkombination bestehend aus

(1) 3-(3,5-Dihalogenphenyl)-oxazolidin-2,4-dionen der allgemeinen Formel

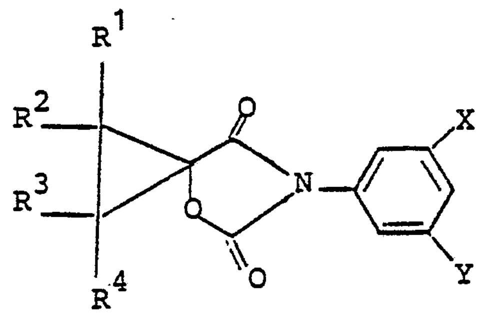

(I)

in welcher

X und Y gleich oder verschieden sind und für Halogen stehen,

$R^1$,$R^2$,$R^3$ und $R^4$ gleich oder verschieden sind und für Wasserstoff oder für Alkyl mit bis zu 4 Kohlenstoffatomen stehen, und ferner noch

$R^1$ oder $R^2$ gemeinsam mit $R^3$ oder $R^4$ für eine viergliedrige Kohlenstoffkette stehen können, die gemeinsam mit den beiden verbindenden Kohlenstoffatomen des Cyclopropanringes einen ankondensierten Cyclohexan- oder Cyclohexen-Ring bildet,

und

(2) N,N-Dimethyl-N'-phenyl-N'-fluordichlormethyl-thiosulfamid der Formel

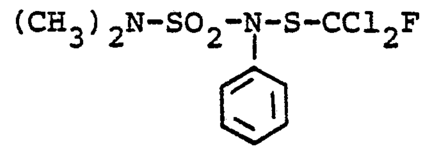

(II).

2) Fungizides Mittel gemäß Anspruch 1, dadurch gekennzeichnet, daß in der Wirkstoffkombination das Gewichtsverhältnis von (1) 3-(3,5-Dihalogenphenyl)-oxazolidin-2,4-dionen zu (2) N,N-Dimethyl-N'-phenyl-N'-fluordichlormethylthio-sulfamid zwischen 1:0,5 und 1:8 liegt.

3) Verfahren zur Bekämpfung von Pilzen, dadurch gekennzeichnet, daß man eine Wirkstoffkombination gemäß Anspruch 1 oder 2 auf Pilze oder deren Lebensraum einwirken läßt.

4) Verwendung von Wirkstoffkombinationen gemäß Anspruch 1 oder 2 zur Bekämpfung von Pilzen.

5) Verfahren zur Herstellung von fungiziden Mitteln, dadurch gekennzeichnet, daß man eine Wirkstoffkombination gemäß Anspruch 1 oder 2 mit Streckmitteln und/oder oberflächenaktiven Mitteln vermischt.